# EUROPÄISCHE PATENTSCHRIFT

(11) **EP 3 787 847 B1**
(45) Veröffentlichungstag und Bekanntmachung des Hinweises auf die Patenterteilung: **27.09.2023**
(21) Anmeldenummer: 19709663.9
(22) Anmeldetag: 04.03.2019
(51) Int. Cl.: B25J 9/00, B67C 3/00

(54) **BEHÄLTERBEHANDLUNGSANLAGE**
CONTAINER HANDLING SYSTEM
INSTALLATION DE TRAITEMENT DE CONTENANTS

(30) Priorität: 03.05.2018 DE 102018206823
(43) Veröffentlichungstag der Anmeldung: 10.03.2021
(73) Patentinhaber: KRONES AG, 93073 Neutraubling (DE)
(72) Erfinder: HAHN, Wolfgang, 93073 Neutraubling (DE)
(74) Vertreter: Grünecker Patent- und Rechtsanwälte PartG mbB
(86) Internationale Anmeldenummer: PCT/EP2019/055248
(87) Internationale Veröffentlichungsnummer: WO 2019/211023

(56) Entgegenhaltungen:
- WO-A1-2014/195373

## Beschreibung

Die Erfindung betrifft eine Behälterbehandlungsanlage zur Behandlung von Behältern, insbesondere Flaschen oder Dosen.

Beim Betrieb, der Wartung oder beim Umbau von Behälterbehandlungsanlagen, insbesondere in der Getränkeindustrie, gibt es verschieden Aufgaben, für die vorgesehen und vorteilhaft ist, dass sie manuell durch einen Bediener ausgeführt werden, die aber zumindest für manche Bediener eine Körperbelastung darstellen, die aus ergonomischen oder gesundheitlichen Gesichtspunkten zu hoch ist. Insbesondere handelt es sich dabei um Aufgaben, bei denen Lasten angehoben werden. Typische Aufgaben sind beispielsweise der Austausch von Anlagenelementen, das Bereitstellen oder Austauschen von Arbeitsmaterial oder das Umstellen der Anlage, beispielsweise beim Formatwechsel, bei dem die Anlage auf ein anderes Behälterformat umgestellt wird.

Es ist bekannt, Hebewerkzeuge oder Hubwerkzeuge als Hilfsmittel für den Bediener bereitzustellen, um diesen zu entlasten. Allerdings können solche Hilfsmittel aufgrund fehlender Feinmotorik, die bei einer unmittelbaren Durchführung der Aufgabe durch den Bediener zur Verfügung steht, nicht für alle beliebigen Aufgaben verwendet werden. Außerdem sind solche Hilfsmittel häufig aufgabenspezifisch ausgebildet. Wenn das der Fall ist, müssen für verschiedene Aufgaben verschiedene Hilfsmittel bereitgestellt werden. Das Verwenden solcher Hilfsmittel ist außerdem, beispielsweise je nach Zugänglichkeit des betroffenen Anlagenteils, auch nur bedingt oder gar nicht möglich.

Weiterhin ist bekannt, Aufgaben vollständig mit Robotern durchzuführen. Dabei kann auf sehr spezialisierte Roboter zurückgegriffen werden, was aber wie auch bei den oben genannten Hilfsmitteln bedeutet, dass für verschiedene Aufgaben verschiedene Roboter bereitgestellt werden müssen. Alternativ können auch vielseitiger einsetzbare Roboter verwendet werden. Diese sind aber sowohl im Aufbau als auch in der Steuerung komplexer und somit teuer, wartungsintensiv und fehleranfällig.

Ferner offenbart die WO 2014/195373 A1 ein Exoskelett, welches durch Bediener von Industrieanlagen durchgeführte Bewegungen zum Anheben und/oder Absenken von Gegenständen unterstützt.

Der Erfindung liegt also die Aufgabe zugrunde, eine Behälterbehandlungsanlage bereitzustellen, die ermöglicht, dass verschiedene Aufgaben bei vergleichsweise geringen Kosten durchgeführt werden können, ohne dass für Bediener der Anlage eine zu hohe Körperbelastung und Gesundheitsgefährdung vorliegt.

Die Aufgabe wird durch den Gegenstand des Anspruchs 1 gelöst. Insbesondere wird die Aufgabe dadurch gelöst, dass die Behälterbehandlungsanlage ein Exoskelett umfasst, das derart ausgebildet ist, dass es durch einen Bediener der Behälterbehandlungsanlage durchgeführte Bewegungen zum Anheben und/oder Absenken von Gegenständen, insbesondere von Anlagenteilen oder Arbeitsmaterial, unterstützt, wobei das Exoskelett derart ausgebildet ist, dass es an den Bediener automatisch anpassbar ist, und die Behälterbehandlungsanlage derart ausgebildet ist, dass zur automatischen Anpassung der jeweilige Bediener identifiziert wird.

Bei dem Exoskelett handelt es sich um eine am Körper tragbare Vorrichtung. Die Vorrichtung kann beispielsweise Streben, Gelenke und/oder Gewichte umfassen, die derart ausgebildet und angeordnet sein können, dass sie einen Teil eines menschlichen Skeletts imitieren. Das Exoskelett kann insbesondere ein eigenständiger Teil der Behälterbehandlungsanlage sein. Das heißt, das Exoskelett kann ohne physische Verbindung mit anderen Teilen der Behälterbehandlungsanlage verwendbar sein. Das Exoskelett kann mit anderen Teilen bzw. Aggregaten der Behälterbehandlungsanlage, insbesondere einer oder mehreren Steuereinrichtungen der Behälterbehandlungsanlage, mittels einer oder mehreren Datenverbindungen verbunden sein. Das Exoskelett kann auch physisch mit anderen Teilen der Behälterbehandlungsanlage verbindbar sein.

Dass das Exoskelett Bewegungen zum Anheben und/oder Absenken unterstützt, bedeutet, dass der Bediener allenfalls nur einen Teil der Masse des anzuhebenden Gegenstandes aus eigener Kraft hebt. Mit anderen Worten wird wenigstens ein Teil der zum Anheben und/oder Absenken benötigten Kraft, insbesondere die gesamte der zum Anheben und/oder Absenken benötigte Kraft, durch das Exoskelett aufgebracht.

Bei den Bewegungen kann es sich um Bewegungen handeln, die der Bediener bei im Betrieb und/oder beim Rüsten und/oder bei der Instandhaltung der Behälterbehandlungsanlage manuell vorzunehmenden Vorgängen ausführt.

Das Vorsehen eines solchen Exoskeletts ermöglicht also, den Bediener zu schützen und zugleich hohe Flexibilität bei geringen Kosten zu gewährleisten, weil grundsätzlich verschiedenste Vorgänge von einem Menschen durchgeführt werden können, so dass keine spezialisierten Werkzeuge oder Roboter für verschiedene Vorgänge benötigt werden. Das Exoskelett stellt ein universelles Hilfsmittel dar, das weitgehend aufgabenunabhängig einsetzbar ist und zugleich verhindert, dass der Bediener übermäßig belastet wird.

Die Behälterbehandlungsanlage kann beispielsweise Etikettiermaschinen, Druckmaschinen, Packmaschinen, Palettiermaschinen, Füllmaschinen, Blasmaschinen, und/oder Transporteinrichtungen umfassen. Die Aufgaben, die Bewegungen zum Anheben und/oder Absenken erforderlich machen, können beispielsweise das Einlegen und/oder Entnehmen von Arbeitsmaterialien, den Austausch von Modulen, das Umrüsten für verschiedene Behälterformate und/oder den Ausbau und Einbau einzelner Elemente, beispielsweise Antriebe oder Verschleißteile, umfassen. Bei den Behältern kann es sich beispielsweise um Flaschen oder Dosen handeln.

Das Exoskelett kann derart ausgebildet sein, dass es an einem oder beiden Armen und optional zusätzlich am Rumpf des Bedieners anbringbar ist. Beispielsweise kann das Exoskelett an den Bediener anschnallbar sein.

Das Exoskelett kann zum Unterstützen des Anhebens mindestens einen Antrieb, beispielsweise einen Elektromotor, und mindestens ein Zugelement umfassen, das eine Kraftübertragung von dem Antrieb derart ermöglicht, dass die Kraft die Bewegung zum Anheben unterstützt. Optional kann das Exoskelett auch mindestens ein Umlenkelement, beispielsweise eine oder mehrere Umlenkrollen und/oder ein oder mehrere Gelenke, umfassen. Das Exoskelett kann weiterhin Gegengewichte aufweisen, die zur Stabilisierung des Bedieners ausgebildet und angeordnet sind.

Das Exoskelett kann derart ausgebildet sein, dass es ermöglicht, dass der Bediener selbst den anzuhebenden Gegenstand greift und die Bewegungen zum Anheben und/oder Absenken ganz oder teilweise selbst steuert.

Das Exoskelett kann beispielsweise derart ausgebildet sein, dass es lediglich eine Entlastung für den Bediener hervorruft und der Bediener die Bewegung, insbesondere die Bewegungsrichtung und die bei der Bewegung zurückgelegte Strecke, uneingeschränkt selbst steuert. Alternativ kann das Exoskelett derart ausgebildet sein, dass es die Bewegungen des Bedieners zumindest teilweise führt oder steuert.

Beispielsweise kann in so einem Fall der Bediener die grundsätzliche Bewegungsrichtung vorgeben und durch eine entsprechende Ausgestaltung und/oder Steuerung kann das Exoskelett die Bewegung in dieser Richtung nur in einem bestimmten Intervall unterstützen und/oder ungehindert zulassen und außerhalb dieses Intervalls die Bewegung nicht unterstützen und/oder ihr entgegenwirken. Dies kann beispielsweise mittels einer Steuereinrichtung erfolgen, die den bzw. die Antriebe des Exoskeletts entsprechend ansteuert.

In der vorliegenden Anmeldung kann die Steuereinrichtung Teil des Exoskeletts sein oder kann einen separaten Anlagenteil darstellen oder in einen anderen Anlagenteil, insbesondere eine zentrale Steuerung, integriert sein.

Grundsätzlich ist es vorteilhaft, wenn der Bediener die Bewegung zumindest teilweise selbst steuert, weil dadurch eine große Flexibilität was die auszuführenden Aufgaben betrifft ermöglicht wird, insbesondere auch die Möglichkeit, auf unvorhergesehene Situationen zu reagieren. Eine Einschränkung des Bewegungsspielraums kann jedoch zum Schutz des Bedieners vor Verletzungen und/oder zum Schutz von Anlagenelementen dienen.

Das Exoskelett kann auch derart ausgebildet sein, dass ein Umschalten zwischen einem Betriebsmodus, in dem die Bewegung ganz durch den Bediener selbst gesteuert wird, und einem Betriebsmodus, in dem die Bewegung teilweise durch den Bediener und teilweise durch das Exoskelett gesteuert wird, möglich ist.

Die erfindungsgemäße automatische Anpassbarkeit des Exoskeletts an einen Bediener kann beispielsweise erfolgen, indem die durch das Exoskelett zu übernehmende Kraft angepasst wird. Zudem kann die Anordnung einzelner Elemente, beispielsweise Befestigungselemente zum Befestigen des Exoskeletts am Bediener oder eines Gegengewichts, an den Bediener anpassbar sein.

Dies hat den Vorteil, dass für verschiedenste Bediener dasselbe Exoskelett verwendet werden kann und somit Anschaffungskosten reduziert werden. Eine automatische Anpassung hat den Vorteil, dass diese in der Regel schneller und präziser ist, als eine manuelle Anpassung. Zudem können Bedienfehler bei der Anpassung verhindert werden.

Zur automatischen Anpassung wird der jeweilige Bediener, beispielsweise mittels der/einer Steuereinrichtung, identifiziert, wobei die Steuereinrichtung dann insbesondere einen oder mehrere Antriebe des Exoskeletts derart ansteuern kann, dass die Anpassung erfolgt. Insbesondere kann die Steuereinrichtung den Antrieb, beispielsweise die Leistung des Antriebs, und/oder eine Übersetzung der Kraft zwischen Antrieb und Zugelement einstellen.

Die Identifizierung des Bedieners kann beispielsweise anhand eines Anmeldevorgangs über Eingabeelemente erfolgen oder anhand einer automatischen Erkennung des Bedieners. Eine solche automatische Erkennung kann beispielsweise mittels einer Gesichtserkennung, einem Retinascanner und/oder einem Fingerabdruckleser erfolgen.

Das Exoskelett kann derart ausgebildet sein, dass es an den Körperbau des Bedieners, insbesondere an Körpergröße, Beinlänge, Rumpflänge und/oder Armlänge, und/oder an die Konstitution des Bedieners, beispielsweise Anteil der Muskelmasse und/oder Kraft im Rumpf und/oder Armen, anpassbar ist.

Dass das Exoskelett an den Körperbau anpassbar ist, kann umfassen, dass die Anordnung einzelner Elemente des Exoskeletts, beispielsweise Befestigungselemente zum Befestigen am Bediener und/oder Gegengewichte, veränderbar ist. Insbesondere kann die Anordnung derart veränderbar sein, dass das Exoskelett sachgemäß an dem Bediener befestigt werden kann und/oder eine Anpassung des Schwerpunkts mit dem Gegengewicht erfolgt.

Dass das Exoskelett an den Körperbau anpassbar ist, kann alternativ oder zusätzlich umfassen, dass basierend auf dem Körperbau die Kraft, die durch das Exoskelett aufgebracht wird, angepasst wird. Dies kann durch Einstellen des Antriebs oder der Übersetzung erfolgen. Beispielsweise kann es bei längeren Armen aufgrund des längeren Hebels vorteilhaft sein, wenn das Exoskelett mehr Kraft aufbringt als bei kürzeren Armen.

Das Exoskelett kann derart ausgebildet sein, dass die Anordnung von Befestigungselementen zum Befestigen am Körper manuell einstellbar ist und dass die Einstellung der Befestigungselemente mittels Sensoren detektiert und verwendet wird, um die Kraft, die durch das Exoskelett aufgebracht wird, entsprechend anzupassen.

Somit kann für jeden Bediener eine optimale Unterstützungswirkung gewährleistet werden.

Das Exoskelett kann mittels einer Steuereinrichtung derart steuerbar sein, dass eine aufgabenspezifische Unterstützung erfolgt.

Das heißt, das Exoskelett kann in verschiedenen Betriebsmodi betrieben werden, die an die jeweils auszuführenden Aufgaben angepasst sind.

Eine aufgabenspezifische Unterstützung kann beispielsweise umfassen, dass je nach auszuführender Aufgabe eine bestimmte Kraft von dem Exoskelett aufgebracht wird. Insbesondere kann der Betrag und die Richtung der Kraft je nach Aufgabe variieren. Dazu kann mittels der Steuereinrichtung beispielsweise die Leistung des Antriebselements und/oder eine Übersetzung zu den Zugelementen und/oder eine Umlenkung der Kraft eingestellt werden. Insbesondere kann die Kraft dabei zeitabhängig gesteuert werden. Dies ermöglicht, dass keine ruckartigen Bewegungen erfolgen, die sowohl Verletzungsgefahr bergen und auch die Gefahr von Kollisionen mit anderen Anlagenteilen erhöhen.

Eine solche aufgabenspezifische Unterstützung hat den Vorteil, dass der Bediener das Exoskelett universell für verschiedene Aufgaben optimal einsetzen und dabei optimal unterstützt werden kann. Besonders geeignet ist dies auch, um Bedienfehler zu verhindern, die beispielsweise durch Unerfahrenheit oder mangelnde Konzentration auftreten können oder, weil die Aufgabe komplex ist.

Die Behälterbehandlungsanlage kann eine Eingabeeinrichtung umfassen, mit der die durchzuführende Aufgabe vom Bediener einstellbar ist, insbesondere mittels manueller Eingabe oder Spracheingabe, und/oder eine Aufgabenerkennungseinrichtung, die derart ausgebildet ist, dass sie die auszuführende Aufgabe automatisch erkennt, insbesondere anhand der Bedienerposition relativ zu Anlagenteilen der Behälterbehandlungsanlage und/oder anhand einer Mustererkennung, bei der Bewegungen eines Bedieners detektiert und automatisch analysiert werden und anhand eines bei der Analyse erkannten Bewegungsmusters die auszuführende Aufgabe identifiziert wird, die dem Bewegungsmuster zugeordnet ist.

Das Eingeben durch den Bediener kann auch umfassen, eine Reihe von nacheinander auszuführenden Aufgaben einzustellen. Alternativ oder zusätzlich kann in der Steuereinrichtung eine Abfolge von Aufgaben hinterlegt sein und der Bediener kann durch Einstellen und/oder Aktivieren einer dieser Aufgaben die gesamte Abfolge von Aufgaben aktivieren, so dass er die auf die erste Aufgabe folgenden Aufgaben nicht explizit einstellen oder aktivieren muss.

Das automatische Erkennen der auszuführenden Aufgabe kann kontextabhängig sein. Insbesondere kann beispielsweise erkannt werden, in welchem Bereich der Anlage der Bediener sich aufhält und/oder anhand eines Bewegungsmusters kann erkannt werden, mit welchem Anlagenteil der Bediener arbeitet. Anhand hinterlegter Daten kann dann bestimmt werden, welche Aufgabe der Bediener durchführt und das Exoskelett kann entsprechend angesteuert werden, dass dieser Aufgabe entsprechende Bewegungen unterstützt werden.

Die durchzuführende Aufgabe kann eine oder mehrere der folgenden Aufgaben umfassen: Blasformwechsel an einer Blasmaschine zum Blasformen von Behältern; Wechsel von Modulaggregaten an modular ausgebildeten Maschinen, beispielsweise Druckmaschinen zum Bedrucken von Behältern oder Etikettiermaschinen; Austausch des Vakuumzylinders zum Halten und Transportieren von Etiketten in Etikettiermaschinen; Austausch von formatabhängigen Behältertransporteinrichtungen und/oder Behälterhebeeinrichtungen, insbesondere Teilungssterne, Hebesterne und/oder Absenksterne; Einlegen und/oder Wechseln von Folienrollen in Verpackungsmaschinen, beispielsweise Rollen mit Schrumpffolie; Einlegen von Kartonagen in Packmaschinen; Einlegen von Zwischenlagen in Palettiermaschinen; Entleeren von Auffangbehältern; Austausch von Drehverteilern und/oder Antrieben und/oder Getrieben.

Alle oben genannten Prozesse sind körperlich belastend, können jedoch motorisch gut und schnell von einem Bediener manuell ausgeführt werden, so dass hier die Unterstützung besonders vorteilhaft ist.

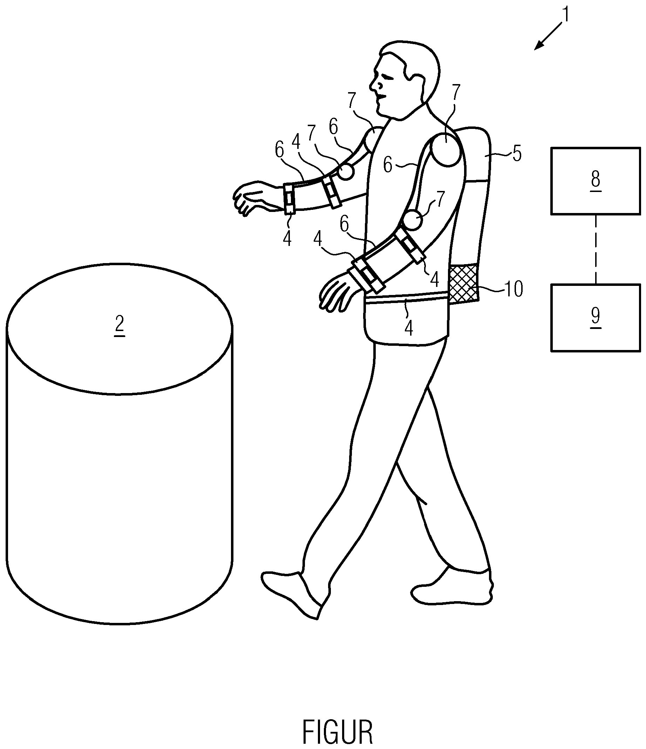

Weitere Merkmale und Vorteile sind in der Figur gezeigt.

Die Figur zeigt eine schematische und nicht-maßstabsgetreue Darstellung einer Behälterbehandlungsanlage mit einem Exoskelett, das an einem Bediener befestigt ist.

In der Figur ist beispielhaft eine Behälterbehandlungsanlage 1 in Form einer Etikettiermaschine gezeigt, wobei der anzuhebende Gegenstand hier ein anzuhebendes Anlagenteil 2 umfasst, hier ein Vakuumzylinder zum Halten und Transportieren von Etiketten. Es kann sich jedoch auch um beliebige andere Arten von Behälterbehandlungsanlagen handeln und bei den Gegenständen, die anzuheben sind, kann es sich auch um andere Anlagenteile und/oder Arbeitsmaterialien handeln.

Weiterhin ist ein Exoskelett 3 gezeigt, das an einem Bediener befestigt ist. Insbesondere sind in diesem Beispiel an beiden Armen und am Rumpf des Bedieners jeweils Befestigungselemente 4 des Exoskeletts, beispielsweise in Form von Schienen und Schnallen, angebracht. Es ist jedoch denkbar, dass das Exoskelett nur an einem Arm und am Rumpf oder nur an einem oder beiden Armen und nicht am Rumpf befestigt ist. Außerdem sind andere Befestigungsmechanismen denkbar.

Das Exoskelett umfasst in diesem Beispiel zwei Antriebe 5 (wegen der Perspektive ist nur einer der Antriebe in der Figur sichtbar), die jeweils einem der Arme zugeordnet sind. Es ist jedoch ebenfalls denkbar, dass nur ein Antrieb vorgesehen ist. Dann kann durch entsprechende Umlenkung die Kraft, sofern nötig, auf verschiedene Teile des Exoskeletts übertragen werden.

Außerdem umfasst das Exoskelett Zugelemente 6, die die Kraft aus den Antrieben auf den jeweiligen Arm übertragen. Die Zugelemente können beispielsweise in Form von Gurten oder Stangen ausgebildet sein. Das Exoskelett kann auch, wie hier gezeigt, Umlenkelemente 7 aufweisen, die dazu ausgebildet sind, die Richtung der Kraft einzustellen. Beispielsweise kann es sich dabei um Gelenke handeln.

Die Behälterbehandlungsanlage kann auch eine Steuereinrichtung 8 umfassen, die zum Steuern des bzw. der Antriebe des Exoskeletts ausgebildet ist. Gegebenenfalls können auch entsprechende Datenverbindungen zwischen der Steuereinrichtung und den Antrieben vorgesehen sein.

Weiterhin kann eine Eingabeeinrichtung 9, beispielsweise in Form eines Touchscreens, vorgesehen sein, mittels der sich der Bediener identifizieren und/oder die durchzuführende Aufgabe einstellen kann.

Die Steuereinrichtung und die Eingabeeinrichtung können jeweils, wie hier gezeigt, separat vom Exoskelett vorliegen. Es ist jedoch auch denkbar, dass eine, oder beide, Teil des Exoskeletts sind.

Weiterhin ist hier ein Gewicht 10 dargestellt, dass als Gegengewicht zur Stabilisierung des Bedieners dient.

Das Exoskelett kann den Bediener so beispielsweise dabei unterstützen, das auszubauende Anlagenteil anzuheben, um es zu entfernen, und an anderer Stelle wieder abzusetzen. Insbesondere die Hebe- bzw. Absenkbewegungen können dabei unterstützt werden. Ebenso kann das Exoskelett den Bediener unterstützen, das einzusetzende Anlagenteil anzuheben und abzusetzen.

Es versteht sich, dass alternativ oder zusätzlich zur Unterstützung beim Bewegen von Anlagenteilen, auch beim Bewegen von Arbeitsmaterial, beispielsweise Kartonagen, oder der Behälter, das Exoskelett die Bewegungen des Bedieners unterstützen kann.

Die Erfindung ist insbesondere nicht auf die Merkmale und Kombinationen der Ausführungsformen, insbesondere der Figur, beschränkt, sondern erstreckt sich auf alle Ausführungsformen, die innerhalb des durch die Ansprüche definierten Schutzumfangs stehen.

## Patentansprüche

1. Behälterbehandlungsanlage (1) zur Behandlung von Behältern, insbesondere Flaschen oder Dosen, umfassend ein Exoskelett (3), das derart ausgebildet ist, dass es durch einen Bediener der Behälterbehandlungsanlage (1) durchgeführte Bewegungen zum Anheben und/oder Absenken von Gegenständen, insbesondere von Anlagenteilen (2) oder Arbeitsmaterial, unterstützt,
wobei das Exoskelett (3) derart ausgebildet ist, dass es an den Bediener automatisch anpassbar ist, und die Behälterbehandlungsanlage derart ausgebildet ist, dass zur automatischen Anpassung der jeweilige Bediener identifiziert wird.

2. Behälterbehandlungsanlage (1) nach Anspruch 1, wobei das Exoskelett (3) derart ausgebildet ist, dass es ermöglicht, dass der Bediener selbst den anzuhebenden Gegenstand greift und die Bewegungen zum Anheben und/oder Absenken ganz oder teilweise selbst steuert.

3. Behälterbehandlungsanlage (1) nach Anspruch 1, wobei das Exoskelett (3) derart ausgebildet ist, dass es an den Körperbau des Bedieners, insbesondere an Körpergröße, Beinlänge, Rumpflänge und/oder Armlänge, und/oder an die Konstitution des Bedieners, beispielsweise Anteil der Muskelmasse und/oder Kraft im Rumpf und/oder Armen, anpassbar ist.

4. Behälterbehandlungsanlage (1) nach einem der vorangegangenen Ansprüche, umfassend eine Steuereinrichtung (8), wobei das Exoskelett (3) mittels der Steuereinrichtung (8) derart steuerbar ist, dass eine aufgabenspezifische Unterstützung erfolgt.

5. Behälterbehandlungsanlage (1) nach Anspruch 4, umfassend eine Eingabeeinrichtung (9) mit der die durchzuführende Aufgabe vom Bediener einstellbar ist, insbesondere mittels manueller Eingabe oder Spracheingabe, und/oder eine Aufgabenerkennungseinrichtung, die derart ausgebildet ist, dass sie die auszuführende Aufgabe automatisch erkennt, insbesondere anhand der Bedienerposition relativ zu Anlagenteilen der Behälterbehandlungsanlage und/oder anhand einer Mustererkennung, bei der Bewegungen eines Bedieners detektiert und automatisch analysiert werden und anhand eines bei der Analyse erkannten Bewegungsmusters die auszuführende Aufgabe identifiziert wird, die dem Bewegungsmuster zugeordnet ist.

6. Behälterbehandlungsanlage (1) nach einem der vorangegangenen Ansprüche, wobei die durchzuführende Aufgabe, die die Bewegungen zum Anheben und/oder Absenken von Gegenständen erforderlich macht,
eine oder mehrere der folgenden Aufgaben umfasst Blasformwechsel an einer Blasmaschine zum Blasformen von Behältern;
Wechsel von Modulaggregaten an modular ausgebildeten Maschinen, beispielsweise Druckmaschinen zum Bedrucken von Behältern oder Etikettiermaschinen;
Austausch des Vakuumzylinders zum Halten und Transportieren von Etiketten in Etikettiermaschinen;
Austausch von formatabhängigen Behältertransporteinrichtungen und/oder Behälterhebeeinrichtungen, insbesondere Teilungssterne, Hebesterne und/oder Absenksterne;
Einlegen und/oder Wechseln von Folienrollen in Verpackungsmaschinen, beispielsweise Rollen mit Schrumpffolie;
Einlegen von Kartonagen in Packmaschinen;
Einlegen von Zwischenlagen in Palettiermaschinen;
Entleeren von Auffangbehältern;
Austausch von Drehverteilern und/oder Antrieben und/oder Getrieben.

## Claims

1. Container handling system (1) for handling containers, in particular bottles or cans, comprising an exoskeleton (3) which is configured in such a way that it supports movements carried out by an operator of the container handling system (1) for lifting and/or lowering objects, in particular system parts (2) or working material,
wherein the exoskeleton (3) is configured such that it is automatically adaptable to the operator, and the container handling system is configured such that the respective operator is identified for automatic adaptation.

2. Container handling system (1) according to claim 1, wherein the exoskeleton (3) is configured in such a way that it enables the operator himself to grip the object to be lifted and to control the movements for lifting and/or lowering completely or partially by himself.

3. Container handling system (1) according to claim 1, wherein the exoskeleton (3) is configured in such a way that it is adaptable to the physique of the operator, in particular to body height, leg length, torso length and/or arm length, and/or to the constitution of the operator, for example proportion of muscle mass and/or strength in the torso and/or arms.

4. Container handling system (1) according to one of the preceding claims, comprising a control device (8), wherein the exoskeleton (3) is controllable by means of the control device (8) in such a way that task-specific support is provided.

5. Container treatment system (1) according to claim 4, comprising an input device (9) with which the task to be performed is settable by the operator, in particular by means of manual input or speech input, and/or a task recognition device which is configured in such a way that it automatically recognizes the task to be performed, in particular on the basis of the operator position relative to system parts of the container handling system and/or on the basis of pattern recognition, in which movements of an operator are detected and automatically analyzed and the task to be performed which is assigned to the movement pattern is identified on the basis of a movement pattern recognized in the analysis.

6. Container handling system (1) according to one of the preceding claims, the task to be performed that requires the movements for lifting and/or lowering objects comprising one or more of the following tasks:
Blow mold change on a blow molding machine for blow molding containers;
Changing modular units on modular machines, for example printing machines for printing containers or labeling machines;
Replacement of the vacuum cylinder for holding and transporting labels in labeling machines;
Replacement of format-dependent container transport devices and/or container lifting devices, in particular dividing stars, lifting stars and/or lowering stars;
Inserting and/or changing of film rolls in packaging machines, for example rolls with shrink film;
insertion of cardboard boxes into packing machines;
insertion of layer pads in palletizing machines;
Emptying of collecting containers;
Exchange of rotary distributors and/or drives and/or gears.

## Revendications

1. Système de manipulation de récipients (1) destiné à la manipulation de récipients, en particulier de bouteilles ou de canettes, comprenant un exosquelette (3) qui est conçu de telle manière qu'il assiste les mouvements effectués par un opérateur du système de manipulation de récipients (1) pour soulever et/ou déposer des objets, en particulier des composants de système (2) ou du matériel de travail,
dans lequel l'exosquelette (3) est conçu de telle sorte qu'il peut être automatiquement adapté à l'opérateur, et le système de manipulation de récipients est conçu de telle manière que l'opérateur respectif est identifié pour une adaptation automatique.

2. Système de manipulation de récipients (1) selon la revendication 1, dans lequel l'exosquelette (3) est conçu de manière à permettre à l'opérateur de saisir lui-même l'objet à soulever et de commander lui-même, en totalité ou en partie, les mouvements de levage et/ou de dépose.

3. Système de manipulation de récipients (1) selon la revendication 1, dans lequel l'exosquelette (3) est conçu de manière à s'adapter à la morphologie de l'opérateur, en particulier à la taille, à la longueur de jambes, à la longueur de torse et/ou à la longueur de bras, et/ou à la constitution de l'opérateur, par exemple à la proportion de masse musculaire et/ou à la force au niveau du tronc et/ou des bras.

4. Système de manipulation de récipients (1) selon l'une des revendications précédentes comprenant un dispositif de commande (8), dans lequel l'exosquelette (3) peut être commandé au moyen du dispositif de commande (8) de manière à assurer une assistance spécifique à la tâche.

5. Système de manipulation de récipients (1) selon la revendication 4, comprenant un dispositif de saisie (9) avec lequel la tâche à effectuer peut être définie par l'opérateur, en particulier au moyen d'une saisie manuelle ou vocale, et/ou au moyen d'un dispositif de reconnaissance de tâche qui est conçu de telle sorte qu'il reconnaît automatiquement la tâche à effectuer, en particulier sur la base de la position de l'opérateur par rapport aux composants du système de manipulation de récipients et/ou sur la base d'une reconnaissance de formes, dans lequel les mouvements d'un opérateur sont détectés et analysés automatiquement et la tâche à effectuer qui est associée à la forme de mouvement est identifiée sur la base d'une forme de mouvement reconnue lors de l'analyse.

6. Système de manipulation de récipients (1) selon l'une des revendications précédentes, dans lequel la tâche à effectuer, qui nécessite les mouvements de levage et/ou de dépose d'objets, comprend une ou plusieurs des tâches suivantes :
changement de moule de soufflage sur une machine de soufflage pour le soufflage de récipients ;
changement d'unités modulaires sur des machines de conception modulaire, par exemple des machines d'impression de récipients ou des machines d'étiquetage ;
remplacement du cylindre à vide servant au maintien et au transport d'étiquettes dans des machines d'étiquetage ;
remplacement de dispositifs de transport de récipients et/ou de dispositifs de levage de récipients dépendant du format, en particulier d'étoiles de distribution, d'étoiles de levage et/ou d'étoiles de dépose ;
installation et/ou remplacement de rouleaux de film dans des machines d'emballage, par exemple de rouleaux de film rétractable ;
insertion de carton dans des machines d'emballage ;
insertion de couches intermédiaires dans des palettiseurs ;
vidange de récipients de collecte ;
remplacement de distributeurs rotatifs et/ou de moteurs et/ou de transmissions.
